# EUROPEAN PATENT APPLICATION

(11) **EP 1 555 659 A1**
(43) Date of publication of application: **20.07.2005**
(21) Application number: 03808862.1
(22) Date of filing: 22.08.2003
(51) Int. Cl.: G11B 7/005, G11B 7/135, G11B 7/24

(54) **MULTI-LAYER INFORMATION MEDIUM, REPRODUCTION METHOD AND REPRODUCTION DEVICE THEREOF**

(30) Priority: 15.10.2002 JP 2002300107
(71) Applicant: MATSUSHITA ELECTRIC INDUSTRIAL CO., LTD., Kadoma-shi, Osaka 571-8501 (JP)
(72) Inventor: FURUKAWA, Shigeaki, Kawanishi-cho, Shiki-gun, Nara 636-0202 (JP); MIYAGAWA, Naoyasu, Kawanishi-shi, Hyogo 666-0004 (JP); NISHIUCHI, Kenichi, Hirakata-shi, Osaka 573-1135 (JP)
(74) Representative: Eisenführ, Speiser & Partner
(86) International application number: PCT/JP2003/010613
(87) International publication number: WO 2004/036559

(57) **Abstract**

During reproduction of a multilayer recording medium including three or more information layers, a light beam is irradiated onto a target information layer. A reflected light from the information layer is mainly detected to generate an information signal RF1, while reflected lights from the other information layers than the target layer are detected to generate an information signal RF2. The signal RF2 is amplified by a gain which is adjusted based on a predetermined cross talk information. A difference between the information signal RF1 and the amplified cross talk signal RF2 is obtained to cancel a component of the cross talk signal in the information signal RF1 and generate a reproduction signal RF3 indicating information recorded in the target information layer to be reproduced.

## Description

### Technical Field

The present invention relates to a technique of reproducing information from a multilayer recording medium having a substrate formed with a thin film including three or more record layers on a board by irradiating the multilayer recording medium with a high-energy beam such as a laser beam.

### Background Art

Recently, an optical recording medium with high-density information, and a reproducing device which reproduces the information from the optical recording medium have been commercialized. In addition, research and development of a multilayer recording medium including a plurality of information layers from which high-quality moving picture can be reproduced for a long period of time and its reproducing device have been earnestly carried out.

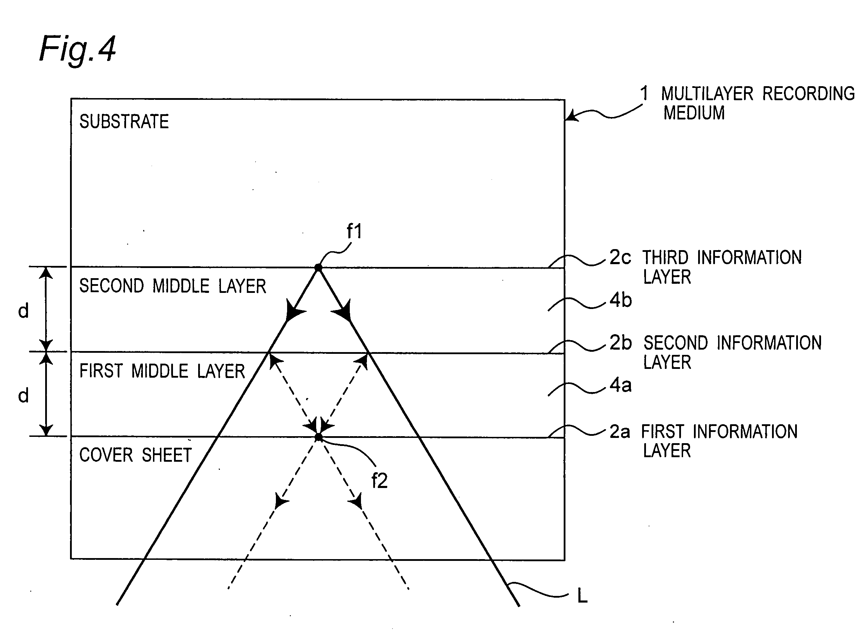

As shown in Fig. 4, the multilayer recording medium includes a plurality of information layers (a first information layer 2a, a second information layer 2b and a third information layer 2c) which are separated by a first middle layer 4a and a second middle layer 4b formed of a resin. Information recorded in each of the information layers 2a to 2c of the multilayer recording medium is read by converging a laser beam spot at each of the information layers 2a to 2c.

### Disclosure of the Invention

### (Problems to be Solved by the Invention)

When the information is reproduced from the multilayer recording medium, there are the following problems.

For example, when the information is reproduced from the multilayer recording medium 1 having the three information layers as shown in Fig. 4, in which the first middle layer 5 and the second middle layer 6 have the same thickness d especially, the following problems are generated.

In order to read the information recorded in the third information layer 2c which is positioned furthest from the incident side of a laser beam L, it is necessary to converge the laser beam L on the third information layer 2c. However, when the laser beam L is converged on the third information layer 2c, the laser beam is converged on a focal point f1 of the third information layer 2c. In addition, a part of the laser beam is reflected by the second information layer 2b and the reflected light focuses on a focal point f2 on the first information layer 2a on the incident side of the laser beam L. The reflected light from the focal point f2 is reflected by the second information layer 2b again, and thus a signal of the first information layer 2a leaks in a signal of the third information layer 2c. Thus, the signal of the first information layer 2a is also detected in addition to the signal of the third information layer 2c which is to be acquired essentially, from the reflected light from the multilayer recording medium. As a result, a quality in signal of the third information layer 2c is lowered.

In order to solve this problem, there is proposed that a thickness of each of the middle layers is varied so as not to focus the second focal point f2 on the first information layer 2a (refer to JP2001-155380A, for example).

However, in order to differentiate the thickness of each middle layer, it is necessary to change a manufacturing process for each middle layer, causing a manufacturing cost to be increased.

### (Solving Method)

The present invention is made to solve the above problems and has an object of the present invention to provide a reproducing device, a reproducing method and a multilayer recording medium, by which, when the information is reproduced from the multilayer recording medium having a plurality of information layers, only a signal from a information layer to be originally reproduced can be reproduced with high quality, without including a signal from layers other than the information layer to be essentially reproduced.

A reproducing method according to the invention is a method of reproducing a multilayer recording medium including at least three information layers. The method includes converging a laser beam output from a light source on a target information layer, detecting the reflected light from the target information layer mainly to generate an information signal, detecting a cross talk light from information layers other than the target information layer to generate a cross talk signal, and removing a signal component corresponding to the cross talk signal from the information signal from the target information layer to generate a reproduction signal indicating information recorded in the target information layer.

The reproducing method may further include adjusting a gain of the cross talk signal based on predetermined information, amplifying the cross talk signal based on the gain. The amplified cross talk signal is used as the signal component corresponding to the cross talk signal.

When a target information layer is reproduced, the predetermined information may indicate a ratio of the cross talk light leaking from the other information layers, and be stored in the multilayer recording medium. In this case, the method may further comprise reading the predetermined information from the multilayer recording medium.

Preferably, the predetermined information may include reflectance information and transmittance information of the other information layers to which a laser beam is irradiated from a surface of the layer opposite to a light source.

When the multilayer recording medium includes three information layers, the predetermined information may preferably include reflectance and transmittance regarding two information layers.

A reproducing device according to the invention is a device for reproducing a multilayer recording medium comprising at least three information layers. The device includes a light source operable to irradiate a laser beam onto one information layer to read information recorded in the multilayer recording medium, a first detector operable to detect a reflected light from the one information layer mainly to generate an information signal, a second detector operable to detect a reflected light from the other information layers than the one information layer to generate a cross talk signal, and a differentiating unit operable to obtain a difference between the information signal from the first detector and a signal generated corresponding to the cross talk signal from the second detector to generate a reproduction signal indicating information recorded in the one information layer.

The reproducing device may further comprise an amplifier operable to adjust a gain of the cross talk signal based on predetermined information to amplify the cross talk signal based on the adjusted gain. In this case, the differentiating unit obtains a difference between the information signal from the first detector and the cross talk signal amplified by the amplifier.

The predetermined information may be cross talk information indicating a ratio of cross talk light leaking from the other information layers on the side of the light source while the one information layer is reproduced. The multilayer recording medium may include a management region to store the predetermined information. The reproducing device may further include a cross talk information detector operable to read the predetermined information from the management region of the multilayer recording medium.

Preferably, the second detector may be provided so as to surround the first detector.

A multilayer recording medium according to the invention includes at least three information layers and irradiated with a laser beam from a light source to reproduce information, and has a management region to store cross talk information. The cross talk information indicates a ratio of a cross talk light leaking from information layers other than a specific information layer on the side of the light source to a reflected light from the specific information layer during reproduction of the specific information layer.

Preferably, thicknesses of a plurality of middle layers to isolate the plurality of information layers may be substantially equal. The cross talk information may preferably include reflectance information in the other information layer when a laser beam is applied from a surface opposite to an incident side of the light source. The management region may preferably be provided on one information layer and information is not recorded in a region on the other information layer corresponding to the management region. The management region may be preferably provided on the information layer which is closest to the light source.

### (Effects of the Invention)

According to the present invention, during reproduction of the target information layer in the multilayer recording medium which has three or more recording layers, the leak (cross talk signal) of the reflected light which focused on the information layer other than the target information layer is removed, thus improving the quality of the reproduction signal of the target information layer. In addition, according to the present invention, since the cross talk signal generated from the middle layer having the same thickness in the multilayer recording medium can be removed, the thickness of each middle layer in the multilayer recording medium can be the same, so that the design or the manufacturing process of the multilayer recording medium is simplified.

### Brief Description of the Drawings

Fig. 1 is a block diagram showing a configuration of a reproducing device according to the present invention.
Fig. 2 is a view showing paths of a laser beam output from an optical pickup and the reflected light, and a schematic configuration of the optical pickup of the reproducing device.
Fig. 3A is a view showing a waveform of an output signal RF1 of a first detector 23a.
Fig. 3B is a view showing a waveform of an output signal RF2 of a second detector 23b.
Fig. 3C is a view showing a waveform of an output signal RF2b of a gain variable amplifier 14.
Fig. 3D is a view showing a waveform of an output signal RF3 of a differential amplifier 15.
Fig. 4 is a sectional view showing a multilayer recording medium to explain a conventional problem.

### Best Mode for Carrying out the Invention

A preferable embodiment of a reproducing method of an information medium, a reproducing device and an optical multilayer recording medium used therein according to the present invention will be described with reference to the drawings hereinafter.

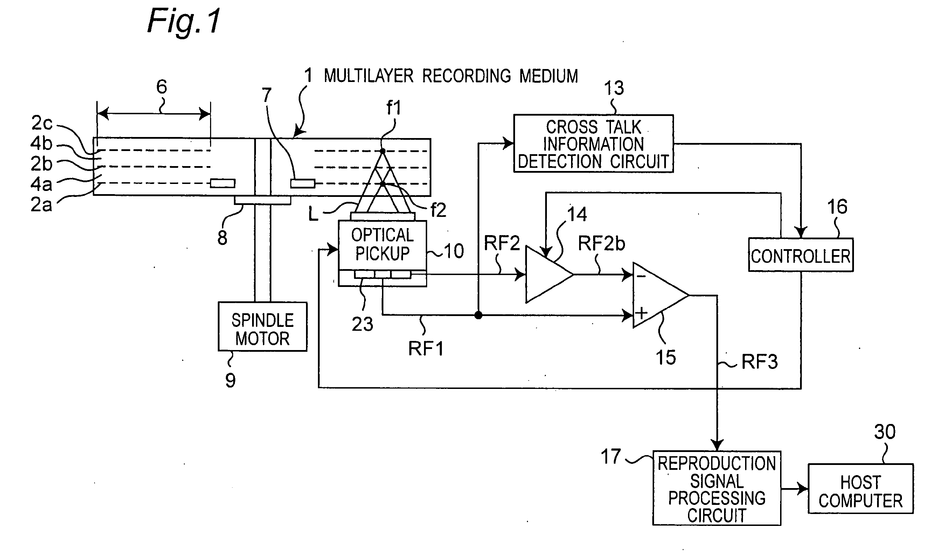

Fig. 1 is a block diagram showing a schematic configuration of a reproducing device of an information medium according to the present invention.

The reproducing device reproduces information recorded in a multilayer recording medium 1. The reproducing device includes a spindle motor 9 which rotates the multilayer recording medium 1, an optical pickup 10 which irradiates the multilayer recording medium 1 with a laser beam and receives the reflected light to output a signal, a cross talk information detection circuit 13 which reads cross talk information recorded in the multilayer recording medium 1 previously, a gain variable amplifier 14 which amplifies a signal detected by the optical pickup 10, a differential amplifier 15 which obtains a difference between two signals detected by the optical pickup 10, a controller 16 which adjusts a gain of the gain variable amplifier 14, and a reproduction signal processing circuit 17.

The reproducing device having the above configuration operates as follows. The optical pickup 10 irradiates a target information layer which is to be read in the multilayer recording medium 1 with a laser beam and detects a signal recorded in the target information layer from its reflected light. After a cross talk signal is removed from the detected signal through the gain variable amplifier 14 and the differential amplifier 15, the detection signal is input to the reproduction signal processing circuit 17 to receive a predetermined signal process, and output to an external device such as a host computer 30 and the like.

As shown in Fig. 1, the multilayer recording medium 1 from which the information is read by the reproducing device has a multilayer structure which includes three information layers consisting of a first information layer 2a, a second information layer 2b and a third information layer 2c. The first information layer 2a is the nearest layer to a light source and the third information layer 2c is furthest from the light source. Each of the information layers 2a to 2c is separated by a first middle layer 4a and a second middle layer 4b which has substantially the same thickness.

In addition, each of the information layers 2a to 2c is formed with an information region which includes a track having a spirally provided concavo-convex groove used in a recording type of information medium, or concavo-convex pits arranged in the track direction which are used for reproduction only. Moving picture data or data of a computer are stored in the information region. In addition, in each of the information layers 2a to 2c, address information which manages a recording position of the information is previously formed. For example, in a case of a multilayer recording medium of read-only type, the address information is provided in the concavo-convex pits together with an information signal. Alternatively, in a case of a multilayer recording medium of recording type, as address information, a wobble address which is a guide groove for recording the information signal is wobbled in the tracking direction, or address pits provided between the guide grooves interrupted by the sector is used.

The multilayer recording medium 1 includes a management region 7 in a specific region, for example, on the information layer or on a cartridge. The management region 7 stores a type of the multilayer recording medium 1, a reproducing condition of the multilayer recording medium 1, and/or management information such as file information or directory information of the recorded information.

Especially, according to this embodiment, cross talk information which is a value showing a ratio of a leak amount of the reflected light (cross talk light) from the other information layers to a reflected light amount in each of the information layers 2a to 2c is stored in the management region 7.

The cross talk information includes reflectance information and transmittance information on a surface opposite to the light incident side (light source side) and reflectance information and transmittance information on a surface on the light incident side, for the information layers other than the target information layer. In addition, as the cross talk information, a gain value of the amplifier 14 calculated based on the reflectance or the transmittance of each information layer may be used. The cross talk information is recorded in the management region 7 in the form of concavo-convex pits in a manufacturing stage, or a recording mark in a writable medium.

For example, when the information layer includes the three layers, the cross talk information includes the reflectance information and the transmittance information on the surface opposite to the light incident side in an information layer (the first information layer )2a positioned two layers closer to the light source from the third information layer 2c which is positioned furthest from the light source, and the reflectance information on the surface on the light incident side in the second information layer 2b. When it is assumed that the reflectance and the transmittance of the first information layer 2a on the surface opposite to the light incident side are r1 and p1, and the reflectance of the second information layer 2b on the surface on the light incident side is r2, a gain g of the amplifier 14 is obtained by g = r1 X p1 X r2.

A preferable positional example of the management region 7 in the multilayer recording medium 1 will be described. It is preferable that the management region 7 storing the management information is provided only on the first information layer 2a which is closest to the light source. This is because in the case where the management region 7 is provided on the first information layer 2a, when an original focal point f1 (referred to as "first focal point") is focused on the first information layer 2a, another focal point f2 (referred to as "second focal point") is not focused on other information layers 2b to 2c, so that an influence of the second focal point f2 is removed and the management information stored in the management region 7 can be read with high quality. In addition, when it needs to position the management region 7 on the third information layer 2c which is furthest from the light source, it is preferable that the information is not recorded on the corresponding region in the other information layers 2a and 2b to the management region 7 in the third information layer 2c. This is because even when a beam spot focuses on the third information layer 2c at the first focal point f1 and it focuses on the first information layer 2a at the second focal point f2, the leakage of the signal from the first information layer 2a can be eliminated.

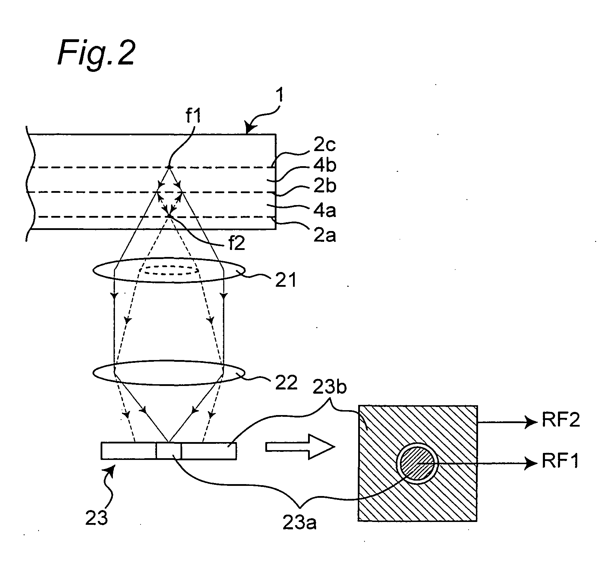

Fig. 2 is a view to explain a reproduction optical system of the optical pickup 10, and paths of irradiation light from the optical pickup 10 and its reflected light. The optical pickup 10 includes an objective lens 21 and a detection lens 22. A detection element 23 includes a first detector 23a and a second detector 23b.

An operation of each detector in the detection element 23 will be described. The second detector 23b has a light receiving region around the first detector 23a, and receives a light which is reflected by the second information layer 2b, converged to the second focal point f2, passes through the first information layer 2a and returns to the optical pickup 10. Since.the reflected lights from the first focal point f1 and the second focal point f2 become parallel through the objective lens 21 and converged on the detection lens 22, it can be converged on the first detector 23a. Meanwhile, the light passed through the second focal point f2 on the first information layer 2a is diffused through the objective lens 21 and enters a large range of the second detector 23b including the first detector 23a through the detection lens 22. When the first detector 23a is designed small enough as compared with the second detector 23b, the second detector 23b can detect enough amount of the cross talk light.

The second detector 23b converts the received light to an electric signal. That is, a signal of the first information layer 2a is output as an electric signal RF2. The output signal RF2 is input to the gain variable amplifier 14.

Next, an operation of the reproducing device will be described in detail.

When loaded with the multilayer recording medium, the reproducing device in this embodiment reads the cross talk information in the multilayer recording medium 1 from the management region 7 of the multilayer recording medium 1. The reproducing device adjusts the gain of the gain variable amplifier 14 based on the read cross talk information to cancel a cross talk signal component contained in the reproduction signal at the time of subsequent reproducing operation. A description of the operation will be made in detail hereinafter.

When the multilayer recording medium 1 is mounted on a clamp 8, the spindle motor 9 is rotated to rotate the multilayer recording medium 1 at CAV (constant angular velocity) or at CLV (constant linear velocity). The optical pickup 10 irradiates the management region 7 in the multilayer recording medium 1 with a beam spot and the first detector 23a receives its reflected light. The reflected light is modulated according to the information recorded in the management region 7 (for example, according to a reflectance change of the concavo-convex pits or the information layer). The first detector 23a outputs an amount of modulated reflected light as an electric signal RF1.

The cross talk information detection circuit 13 demodulates the input signal RF1 from the management region 7 which is detected by the first detector 23a, and reads the cross talk information of each information layer of the multilayer recording medium 1, and outputs it to the controller 16.

The controller 16 adjusts an amplification value (gain) of the gain variable amplifier 14 based on the read cross talk information. At that time, the controller 16 identifies the information layer on which the beam spot focuses on the first focal point f1 based on an address which is positional information of the multilayer recording medium 1, and variably controls the amplification value of the gain variable amplifier 14 according to its identification result. For example, when the information layer to be reproduced is the third information layer 2c, the controller 16 determines the amplification factor of the gain variable amplifier 14 so as to cancel the cross talk signal component sufficiently based on the read cross talk information, and outputs it. In addition, when the information layer to be reproduced is the first information layer 2a or the second information layer 2b, since the cross talk is not generated from other information layers, the controller 16 makes the amplification factor to be output from the controller 16 zero. Thus, the cross talk information is acquired.

Next, a description will be made of a cancel process of the cross talk signal in a case where the information recorded in the third information layer 2c is reproduced.

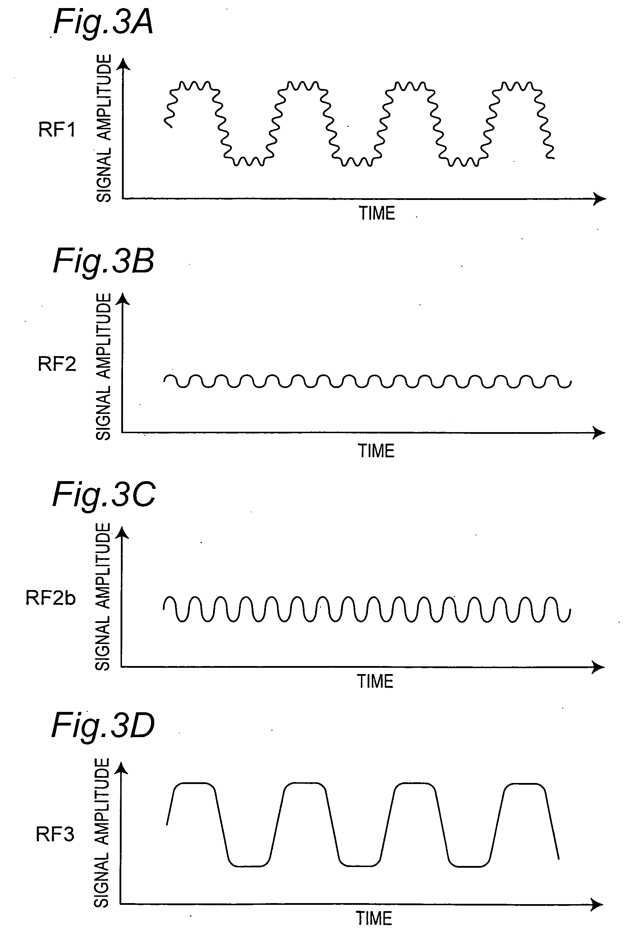

Figs. 3A to 3D are views showing signal waveforms output from nodes of the reproducing device during the reproducing operation. Fig. 3A shows a waveform of an output signal RF1 of the first detector 23a, Fig. 3B shows a waveform of an output signal RF2 of the second detector 23b, Fig. 3C shows a waveform of an output signal RF2b of the gain variable amplifier 14, and Fig. 3D shows a waveform of an output signal RF3 of the differential amplifier 15.

When the controller 16 requests the reproduction of the third information layer 2c, the optical pickup 10 makes the beam spot jump to the third information layer 2c so as to converge it on the first focal point f1 on the third information layer 2c.

The reflected light from the third information layer 2c is received by the first detector 23a in the optical pickup 10 and converted to the electric signal as the reproduction signal of the third information layer 2c. In addition, a part of light beam L is reflected by the second information layer 2b and the reflected light is converged on the second focal point f2 on the first information layer 2a. The reflected light of the light beam converged on the second focal point f2 on the first information layer 2a is reflected by the second information layer 2b again, and received by the first detector 23a. As a result, both reflected light from the third information layer 2c and reflected light from the first information layer 2a are received by the first detector 23a and the signals of the third information layer 2c and the first information layer 2a are converted to the electric signal RF 1 to output it (refer to Fig. 3A). The output signal RF1 is input to the differential amplifier 15.

The second detector 23b receives light which is reflected by the second information layer 2b, converged to the second focal point f2, passes through the first information layer 2a and returns into the optical pickup 10, and converts it to the electric signal RF2 to output it (refer to Fig. 3B). The electric signal RF2 contains the cross talk signal.

The signal generated from the reflected light received by the second detector 23b (the cross talk signal) is a weak signal whose intensity is about 1/20 of the reflected light received by the first detector 23a. Therefore, the signal generated by the second detector 23b is amplified by the gain variable amplifier 14 to an appropriate level (20 times, for example) in order to sufficiently cancel the cross talk signal component contained in the information signal detected by the first detector 23a, and then output as the signal RF2b (refer to Fig. 3C). It is noted that the amplification factor of the gain variable amplifier 14 is controlled by the controller 16 based on the cross talk information read by the cross talk information detection circuit 13, as described above.

The differential amplifier 15 obtains a difference between the signal RF1 from the first detector 23a and the signal RF2b amplified by the gain variable amplifier 14. That is, the signal RF2b which contains only the signal component of the first information layer 2a and which is amplified to the appropriate level is cancelled from the signal RF1 containing the signal component of the third information layer 2c and the signal component of the first information layer 2a in synchronization with the signal RF1. The differential amplifier 15 outputs a signal RF3 which contains only the signal component of the third information layer 2c to the reproduction signal processing circuit 17 (refer to Fig. 3D). Thus, the signal RF3 becomes a signal in which the cross talk signal component is eliminated and contains only the signal component of the essentially required information.

The reproduction signal processing circuit 17 demodulates or decodes the signal RF3 to output it to an external device (for example, the host computer 30) or to a display (not shown) as moving picture data or computer data.

As described above, according to this embodiment, when the third information layer 2c is reproduced, the output signal of the first detector 23a which receives a synthesized signal of the signal from the target third information layer 2c and the leaking signal from the first information layer 2a, and the output signal of the second detector 23b which receives the leaking signal from the first information layer 2a are detected. The leaking signal from the first information layer 2a is cancelled. Thus, only the signal of the third information layer 2c can be retrieved and reproduced. , and As a result, a quality of the reproduction signal of the third information layer 2c is improved.

Although the cross talk information is detected from the management region 7 when the multilayer recording medium 1 is inserted in the reproducing device in the above description, the detection timing of the cross talk information is not limited to this. For example, the cross talk information may be detected periodically during the operation.

In addition, although a description has been made of the case where the multilayer recording medium including the three information layers is reproduced in this embodiment, when the multilayer recording medium includes four or more information layers, reflected lights also leak from other information layers. In the case of the four information layers, when the beam spot is converged on the fourth information layer which is the furthest from the light source, the second focal point is focused on the second information layer which is closer to the light source by tow layers than the fourth information layer. In addition, when the beam spot is converged on the third information layer from the light source, the second focal point is focused on the first information layer which is closest to the light source. That is, the cross talk is generated between the n-th information layer and the (n-2)th information layer. In either case, similar to this embodiment, a quality of a reproduction signal of a target information layer can be improved by removing, from an output signal of a first detector 23a which is a main detector, an output signal of a second detector 23b which detects signals leaking from the other layers.

### Industrial Applicability

According to a reproducing method and a reproducing device of the present invention, the high-quality reproduction signal can be generated by removing an influence of the cross talk signals from the information layers other than the target information layer. Thus they can be applied to the device which reproduces information by irradiating the multilayer recording medium including the three or more record layers with the laser beam. In addition, the information medium of the present invention can be used in such a reproducing device.

Although the present invention has been described in terms of a preferred embodiment, it will be appreciated that various modifications and alterations might be made by those skilled in the art without departing from the sprit and scope of the invention. The invention should therefore be measured in terms of the appended claims. It is noted that this application relates to Japanese Patent Application No. 2002-300107 filed on October 15, 2002, the entire contents of which are incorporated by reference.

## Claims

1. A method of reproducing a multilayer recording medium including at least three information layers, comprising:
converging a laser beam output from a light source on a target information layer, detecting the reflected light from the target information layer mainly to generate an information signal;
detecting a cross talk light from information layers other than the target information layer to generate a cross talk signal; and
removing a signal component corresponding to the cross talk signal from the information signal from the target information layer to generate a reproduction signal indicating information recorded in the target information layer.

2. The reproducing method according to claim 1, further comprising adjusting a gain of the cross talk signal based on predetermined information, amplifying the cross talk signal based on the gain, wherein the amplified cross talk signal is used as the signal component corresponding to the cross talk signal.

3. The reproducing method according to claim 2, wherein, when a target information layer is reproduced, the predetermined information indicates a ratio of the cross talk light leaking from the other information layers and is stored in the multilayer recording medium, and
the method further comprises reading the predetermined information from the multilayer recording medium.

4. The reproducing method according to claim 3, wherein the predetermined information includes reflectance information and transmittance information of the other information layers to which a laser beam is irradiated from a surface of the layer opposite to a light source.

5. The reproducing method according to claim 3, wherein, when the multilayer recording medium includes three information layers, the predetermined information includes reflectance and transmittance regarding two information layers.

6. The reproducing method according to claim 1, wherein the cross talk signal includes a signal from the second layer from the target layer on the light source side.

7. A reproducing device of a multilayer recording medium comprising at least three information layers, comprising:
a light source operable to irradiate a laser beam onto one information layer to read information recorded in the multilayer recording medium;
a first detector operable to detect a reflected light from the one information layer mainly to generate an information signal;
a second detector operable to detect a reflected light from the other information layers than the one information layer to generate a cross talk signal; and
a differentiating unit operable to obtain a difference between the information signal from the first detector and a signal generated corresponding to the cross talk signal from the second detector to generate a reproduction signal indicating information recorded in the one information layer.

8. The reproducing device according to claim 7, further comprising an amplifier operable to adjust a gain of the cross talk signal based on predetermined information to amplify the cross talk signal based on the adjusted gain, wherein
the differentiating unit obtains a difference between the information signal from the first detector and the cross talk signal amplified by the amplifier.

9. The reproducing device according to claim 7, wherein the predetermined information is cross talk information indicating a ratio of cross talk light leaking from the other information layers on the side of the light source while the one information layer is reproduced, the multilayer recording medium includes a management region to store the predetermined information, and the reproducing device further includes a cross talk information detector operable to read the predetermined information from the management region of the multilayer recording medium.

10. The reproducing device according to claim 7, wherein the second detector is provided so as to surround the first detector.

11. A multilayer recording medium comprising at least three information layers and irradiated with a laser beam from a light source to reproduce information, comprising:
a management region to store cross talk information indicating a ratio of a cross talk light leaking from information layers other than a specific information layer on the side of the light source to a reflected light from the specific information layer during reproduction of the specific information layer.

12. The multilayer recording medium according to claim 11, wherein thicknesses of a plurality of middle layers to isolate the plurality of information layers are substantially equal.

13. The multilayer recording medium according to claim 11, wherein the cross talk information includes reflectance information in the other information layer when a laser beam is applied from a surface opposite to an incident side of the light source.

14. The information medium according to claim 11, wherein the management region is provided on one information layer and information is not recorded in a region on the other information layer corresponding to the management region.

15. The information medium according to claim 11, wherein the management region is provided on the information layer which is closest to the light source.
